# EUROPÄISCHE PATENTSCHRIFT

(11) **EP 2 143 572 B1**
(45) Veröffentlichungstag und Bekanntmachung des Hinweises auf die Patenterteilung: **20.03.2013**
(21) Anmeldenummer: 09160454.6
(22) Anmeldetag: 18.05.2009
(51) Int. Cl.: B60C 11/13, B60C 11/04

(54) **Fahrzeugluftreifen**
Pneumatic tyres for a vehicle
Pneus de véhicule

(30) Priorität: 09.07.2008 DE 102008032281
(43) Veröffentlichungstag der Anmeldung: 13.01.2010
(73) Patentinhaber: Continental Reifen Deutschland GmbH, 30165 Hannover (DE)
(72) Erfinder: Weber, Christian, 30826 Garbsen (DE); Ackermann, Lutz, 38539 Müden (DE); Zernetsch, Bernhard, 30926 Seelze (DE)
(74) Vertreter: Finger, Karsten

(56) Entgegenhaltungen:
- EP-A- 0 313 361
- EP-A- 1 541 382
- JP-A- 2 088 311
- JP-A- 10 258 612
- JP-A- 11 165 504

## Beschreibung

Die Erfindung betrifft einen Fahrzeugluftreifen in Radialbauart für Schwerlastfahrzeuge, mit einer Radialkarkasse, einem mehrlagigen Gürtelverband und einem Laufstreifen mit mindestens fünf in Umfangsrichtung umlaufenden Profilrippen und/oder Profilblockreihen, wobei zumindest eine Rippe oder Reihe über ihren Umfang eine geringere Höhe aufweist als andere Rippen oder Reihen, wobei in zumindest einer Laufstreifenhälfte die der Schulterrippe bzw. Schulterblockreihe benachbart verlaufende Profilrippe bzw. Blockreihe über eine axiale Erstreckung von mindestens 75% eine geringere Höhe aufweist, wobei die Außenflächen der sonstigen Profilrippen oder Blockreihen von einer einheitlichen Einhüllenden erfassbar sind.

Ein Fahrzeugluftreifen der eingangs genannten Art ist aus der EP-A-0 313 361 bekannt. Der Laufstreifen weist durch Umfangsnuten voneinander getrennte Profilrippen auf, wobei die an die Schulterrippe anschließende Profilrippe über ihre gesamte Breite gegenüber ihren benachbarten Profilrippen abgesenkt ist. Durch diese Maßnahme soll ein ungleichmäßiger Laufstreifenabrieb verhindert werden. Aus der JP 02 088 311 A ist ein Fahrzeugluftreifen bekannt, dessen Laufstreifen in den Schulterbereichen eine Profilrippe aufweist, welche einen im Niveau abgesenkten Umfangsbereich aufweist, der vom restlichen Umfangsbereich der Schulterrippe durch eine schmale, in Umfangsrichtung umlaufende Rille getrennt ist. Diese Maßnahme soll unregelmäßigen Abrieb in den Schulterbereichen vermeiden helfen.

Ein weiterer Fahrzeugluftreifen ist aus der US-A-5,769,978 bekannt. Um die Haltbarkeit der Gürtellagen an den Randbereichen zu erhöhen, sind die Schulterrippen in einer geringeren Höhe ausgeführt als die anderen Profilrippen bzw. Blockreihen, die sich von einer Einhüllenden umschließen lassen. Die schulterseitig verlaufenden Umfangsnuten sind daher bezüglich einer durch sie verlaufenden Mittelebene deutlich asymmetrisch, die schulterseitig verlaufende Nutflanke ist kürzer als die dieser gegenüber verlaufenden Nutflanke.

Aus der DE-A-2 211 687 ist ein Fahrzeugluftreifen bekannt, dessen Laufstreifen in Axialrichtung in drei Teile unterteilt ist, welche einen zentralen Abschnitt und zwei seitliche Schulterabschnitte bilden. Die Schulterabschnitte setzen sich jeweils aus drei schmäleren Umfangsrippen zusammen, welche weniger radial nach außen ragen als der mittlere Bereich des Laufstreifens. Der zentrale Abschnitt steht somit über seine gesamte Breite mit dem Untergrund in Berührung, wobei die seitlichen Schulterabschnitte nur zeitweise in Berührung mit dem Untergrund treten. Durch diese Laufstreifenkonstruktion soll während Geradeausfahrt der Laufstreifen den Boden nur mit dem zentralen Bereich berühren, während bei Kurvenfahrt und unter hoher Geschwindigkeit der seitliche Schulterabschnitt, der sich auf der radial äußeren Seite in Bezug auf die Kurve befindet, zumindest zeitweilig mit dem Boden in Kontakt gerät.

Es ist bekannt, dass am Nutgrund von Umfangsnuten, die in Laufstreifen von Schwerlastkraftfahrzeugen den Schulterrippen oder Schulterblockreihen benachbart sind, unter höherer Belastung Risse entstehen. Um die Gefahr der Rissbildung zu reduzieren, wurde unter anderem versucht, die Gürtellagen zu verbreitern. Diese Maßnahme wirkt sich jedoch auf die Gürtelhaltbarkeit nachteilig aus. Es wurde ferner vorgeschlagen, am Rillengrund besondere Gummischichten einzubringen, die weniger zur Rissbildung neigen. Diese Maßnahme ist in der Serienproduktion von Reifen nur schwer einsetzbar.

Der Erfindung liegt somit die Aufgabe zugrunde, einen Reifen der eingangs genannten Art derart zu gestalten, dass das Entstehen von Einrissen am Nutgrund von schulterseitig verlaufenden Umfangsnuten weitgehend vermieden wird, ohne dass nachteilige Auswirkungen auf andere Profileigenschaften zu erwarten sind.

Gelöst wird die gestellte Aufgabe erfindungsgemäß dadurch, dass die Höhe der eine geringere Höhe aufweisenden Profilrippe bzw. Blockreihe bei der schulterseitigen Umfangsnut am geringsten ist und in axialer Richtung kontinuierlich größer wird.

Die Reduktion der Höhe der Profilrippe bzw. Blockreihe, welche der Schulterblockreihe bzw. Schulterrippe benachbart verläuft, führt zu einer Abnahme der Belastung im Nutgrund der schulterseitigen Umfangsnut. Die Verringerung der Belastung geht mit einer deutlichen Abnahme der Rissanfälligkeit am Nutgrund dieser Umfangsnut einher.

Gemäß einer bevorzugten Ausführungsform ist die vom Nutgrund der schulterseitigen Umfangsnut gemessene Höhe jener Profilrippe beziehungsweise Blockreihe, die eine geringere Höhe aufweist, um 1 mm bis 3 mm geringer als die vom Nutgrund der gleichen Umfangsnut gemessene Höhe der Schulterrippe beziehungsweise Schulterblockreihe. Eine Reduktion der Höhe im Ausmaß von bis zu 3 mm zeigt keine nennenswerten nachteiligen Auswirkungen auf andere Profileigenschaften.

Bei einer weiteren Ausführung wird die eine geringere Höhe aufweisende Profilrippe beziehungsweise Blockreihe ihrer axial inneren Umfangsnut benachbart über einen Umfangsstreifen von maximal 25% ihrer mittleren Breite von der Einhüllenden erfasst.

Weitere Merkmale, Voreile und Einzelheiten der Erfindung werden nun anhand der Zeichnung, die Ausführungsbeispiele darstellt, näher beschrieben. Dabei zeigen
Fig. 1 einen Teilquerschnitt durch einen Fahrzeugluftreifen im Bereich des Laufstreifens mit einer Ausführungsform der Erfindung und
Fig. 2 einen Teilquerschnitt analog zu Fig. 1 mit einer weiteren Ausführungsvariante der Erfindung.

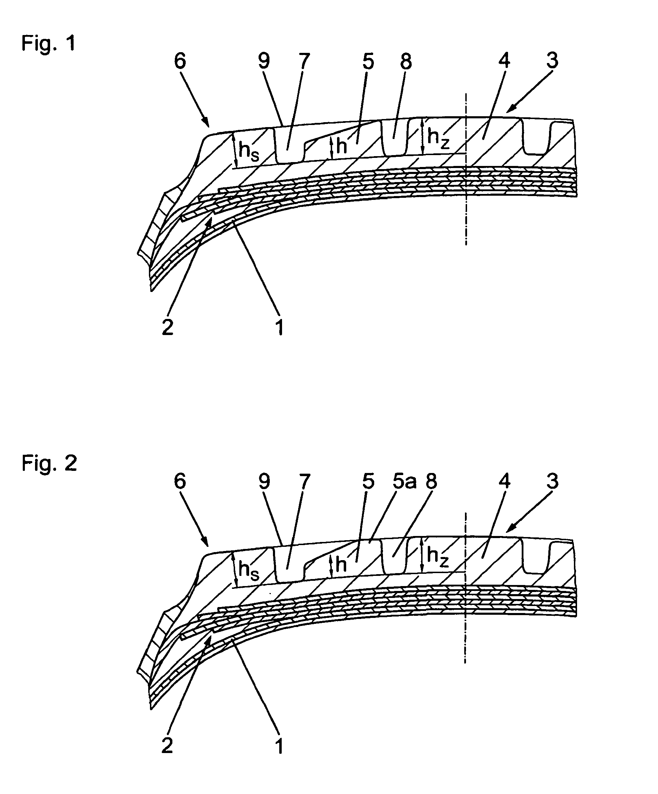

Fig. 1 und 2 zeigen den Laufstreifen 3 eines LKW-Reifens mit einer Radialkarkasse 1 und einem Gürtelverband 2. Die Radialkarkasse 1 kann auf herkömmlicher Weise ein- oder mehrlagig ausgeführt sein und Festigkeitsträger aus Stahlkond beinhalten. Der Gürtelverband 2 weist vier Gürtellagen auf, die ebenfalls auf herkömmliche Weise ausgeführt und angeordnet sein können. Der Laufstreifen 3 setzt sich aus fünf etwa gleich breiten und in Umfangsrichtung umlaufenden Profilrippen 4, 5 und 6 zusammen. Die Profilrippen können zum Teil oder zur Gänze durch Profilblockreihen ersetzt sein. Die Profilrippen 4, 5, 6 sind voneinander durch breite, in Umfangsrichtung umlaufende Umfangsnuten 7, 8 getrennt. Die Umfangsnuten 7, 8 können über den Reifenumfang gerade verlaufen, sie können jedoch auch zick-zack-artig oder zick-zack-ähnlich verlaufen. Die Profilrippe 4 verläuft entlang des Reifenäquators, die beiden Profilrippen 6 schulterseitig und die beiden Profilrippen 5 zwischen den Schulterrippen 6 und der zentralen Rippe 4.

Die Außenflächen der zentralen Profilrippe 4 und der Schulterrippen 6 lassen sich von einer einheitlichen einzigen Einhüllenden 9 zumindest im Wesentlichen erfassen bzw. umschließen. Die Einhüllende 9 ist in Fig. 1 und 2 punktiert angedeutet und ist im Querschnitt eine zur Äquatorebene symmetrisch verlaufende und über die Laufstreifenbreite geringfügig aber gleichmäßig gebogene Kurve.

Fig. 1 zeigt eine Ausführung einer mittleren Rippe 5. Die Höhe h der Rippe 5 ist bei der schulterseitig gelegenen Umfangsnut 7 geringer als bei der anderen Umfangsnut 8. Im axialen Schnitt wir daher die Höhe h der Rippe 5 zwischen der Umfangsnut 7 und der Umfangsnut 8 kontinuierlich größer. Die Höhe h ist dabei höchstens 3 mm geringer als die Höhe hₛ der Schulterrippe 6 oder als die Höhe h_{z} der zentralen Rippe 4.

Eine weitere mögliche Ausführungsführungsform zeigt Fig. 2. Analog zu Fig. 1 weist die Rippe 5 ihre geringste Höhe h bei der der Schulterrippe 6 benachbarten Umfangsnut 7 auf, wobei h maximal um 3 mm geringer ist als die Höhen hₛ und h_{z} der benachbarten Rippen 4 und 6. Ein schmaler Streifen 5a der mittleren Rippe 5 an ihrem an die Umfangsnut 8 anschließenden Bereich befindet sich auf gleicher Höhe wie die Außenflächen der Profilrippen 4 und 6 und wird daher von der Einhüllenden 9 erfasst. Die axiale Erstreckung dieses schmalen Streifens beträgt maximal 25% der mittleren Profilrippenbreite. Die Höhe h der Profilrippe 5 vergrößert sich von der Umfangsnut 7 bis zum Streifen 5a kontinuierlich.

Die der Schulterrippe 6 benachbarte Umfangsnut 7 ist besonders anfällig für das Entstehen von Rissen im Nutgrund. Die Maßnahme, die Höhe jener Profilrippen 5 zu reduzieren, die zu den Schulterrippen 6 benachbart sind, führt zu einer Abnahme der Belastung am Nutgrund der Umfangsnut 7 und somit zu einer Reduktion der Rissanfälligkeit.

Die erfindungsgemäße Maßnahme, die an die Schulterrippen oder Schulterblockreihen anschließenden Rippen bzw. Blockreihen in ihrer Höhe zu reduzieren, lässt sich auch bei Laufstreifenprofilen anwenden, die sechs oder sieben Profilrippen und/oder Blockreihen mit zumindest im Wesentlichen übereinstimmenden axialen Breiten aufweisen.

### Bezugszeichenliste

- 1: Radialkarkasse
- 2: Gürtelverband
- 3: Laufstreifen
- 4: zentrale Rippe
- 5: mittlere Rippe
- 5a: Streifen
- 6: Schulterrippe
- 7: Umfangsnut
- 8: Umfangsnut
- 9: Einhüllende
- h: Höhe
- h_{S}: Höhe
- h_{Z}: Höhe

## Patentansprüche

1. Fahrzeugluftreifen in Radialbauart für Schwerlastfahrzeuge, mit einer Radialkarkasse (4), einem mehrlagigen Gürtelverband (2) und einem Laufstreifen (3) mit mindestens fünf in Umfangsrichtung umlaufenden Profilrippen und/oder Profilblockreihen (4, 5, 6), wobei zumindest eine Rippe oder Reihe (5) über ihren Umfang eine geringere Höhe (h) aufweist als andere Rippen oder Reihen (5, 6), wobei in zumindest einer Laufstreifenhälfte die der Schulterrippe bzw. Schulterblockreihe (6) benachbart verlaufende Profilrippe (5) bzw. Blockreihe über eine axiale Erstreckung von mindestens 75% eine geringere Höhe (h) aufweist, wobei die Außenflächen der sonstigen Profilrippen (4, 6) oder Blockreihen von einer einheitlichen Einhüllenden (9) erfassbar sind,
**dadurch gekennzeichnet,**
**dass** die Höhe (h) der eine geringere Höhe aufweisenden Profilrippe (5) bzw. Blockreihe bei der schulterseitigen Umfangsnut (7) am geringsten ist und in axialer Richtung kontinuierlich größer wird.

2. Fahrzeugluftreifen nach Anspruch 1, **dadurch gekennzeichnet, dass** die vom Nutgrund jener Umfangsnut (7), die zwischen der Schulterrippe (6) bzw. der Schulterblockreihe (6) und der dieser benachbarten Profilrippe (5) oder Blockreihe verläuft, gemessene Höhe (h) der eine geringere Höhe (h) aufweisenden Profilrippe (5) bzw. Blockreihe um 1 mm bis 3 mm geringer ist als die vom Nutgrund der gleichen Umfangsnut (7) gemessene Höhe (hₛ) der Schulterrippe (6) bzw. Schulterblockreihe.

3. Fahrzeugluftreifen nach Anspruch 1 oder 2, **dadurch gekennzeichnet, dass** die eine geringere Höhe (h) aufweisende Profilrippe (5) bzw. Blockreihe ihrer axial inneren Umfangsnut (8) benachbart über einen Umfangsstreifen (5a) von maximal 25% ihrer mittleren Breite von der Einhüllenden (9) erfasst wird.

## Claims

1. Pneumatic vehicle tyre of a radial type of construction for heavy trucks, with a radial carcass (4), a multi-ply breaker belt assembly (2) and a tread rubber (3) with at least five profile ribs and/or rows of profile blocks (4, 5, 6) running in the circumferential direction, at least one rib or row (5) having a smaller height (h) over its circumference than other ribs or rows (5, 6), wherein, in at least one half of the tread rubber, the profile rib (5) or trow of blocks that runs adjacent to the shoulder rib or shoulder row of blocks (6) has a smaller height (h) over an axial extent of at least 75 0, wherein the outer faces of the other profile ribs (4, 6) or rows of blocks can be at a tangent to one and the same envelope (9), **characterized in that** the height (h) of the profile rib (5) or row of blocks having a smaller height is lowest at the circumferential groove (7) on the shoulder side and becomes continuously greater in the axial direction.

2. Pneumatic vehicle tyre according to Claim 1, **characterized in that** the height (h), measured from the groove base of that circumferential groove (7) that runs between the shoulder rib (6) or the shoulder trow of blocks (6) and the profile rib (5) or row of blocks adjacent thereto, of the profile rib (5) or row of blocks that has a smaller height (h) is smaller by 1 mm to 3 mm than the height (hₛ), measured from the groove base of the same circumferential groove (7), of the shoulder rib (6) or shoulder row of blocks.

3. Pneumatic vehicle tyre according to Claim 1 or 2, **characterized in that**, adjacent to its axially inner circumferential groove (8), the profile rib (5) or row of blocks that has a smaller height (h) is at a tangent to the envelope (9) over a circumferential strip (5a) of at most 25% of its average width.

## Revendications

1. Pneu de véhicule de construction radiale pour véhicules poids lourds, comprenant une carcasse radiale (4), un bandage de ceinture multicouche (2) et une bande de roulement (3) avec au moins cinq nervures profilées et/ou rangées de blocs profilés (4, 5, 6) circonférentielles dans la direction périphérique, au moins une nervure ou une rangée (5) présentant sur sa périphérie une plus faible hauteur (h) que d'autres nervures ou rangées (5, 6), et dans au moins une moitié de la bande de roulement, la nervure profilée (5) ou la rangée de blocs s'étendant à proximité de la nervure d'épaulement ou de la rangée de blocs d'épaulement (6) présentant une hauteur plus faible (h) sur une étendue axiale d'au moins 75 %, les surfaces extérieures des autres nervures profilées (4, 6) ou rangées de blocs pouvant être détectées depuis une extrémité d'enveloppe uniforme (9),
**caractérisé en ce que**
la hauteur (h) de la nervure (5) ou de la rangée de blocs présentant une plus faible hauteur est la plus faible au niveau de la rainure périphérique (7) du côté de l'épaulement, et devient progressivement plus grande dans la direction axiale.

2. Pneu de véhicule selon la revendication 1, **caractérisé en ce que** la hauteur (h) de la nervure profilée (5) ou de la rangée de blocs présentant une hauteur inférieure (h), mesurée depuis la base de rainure de la rainure périphérique (7) qui s'étend entre la nervure d'épaulement (6) ou la rangée de blocs d'épaulement (6) et la nervure profilée (5) ou la rangée de blocs adjacente à celle-ci, est inférieure de 1 mm à 3 mm à la hauteur (hₛ) de la nervure d'épaulement (6) ou de la rangée de blocs d'épaulement mesurée depuis la base de rainure de la même rainure périphérique (7).

3. Pneu de véhicule selon la revendication 1 ou 2, **caractérisé en ce que** la nervure profilée (5) ou la rangée de blocs présentant une hauteur inférieure (h) adjacente à sa rainure périphérique axialement interne (8) est détectée par le biais d'un ruban périphérique (5a) d'au moins 25 % de sa largeur maximale depuis l'extrémité d'enveloppe (9).
